# EUROPEAN PATENT SPECIFICATION

(11) **EP 4 145 670 B1**
(45) Date of publication and mention of the grant of the patent: **10.12.2025**
(21) Application number: 22758787.0
(22) Date of filing: 17.02.2022
(51) Int. Cl.: H02J 7/00

(54) **BATTERY PACK OUTPUT CONTROL CIRCUIT**
BATTERIEPACK-AUSGANGSSTEUERSCHALTUNG
CIRCUIT DE COMMANDE DE SORTIES DE BLOC-BATTERIE

(30) Priority: 23.02.2021 CN 202110202387
(43) Date of publication of application: 08.03.2023
(73) Proprietor: Shenzhen Tritek Limited, Shenzhen, Guangdong 518000 (CN)
(72) Inventor: LI, Changbiao, Shenzhen, Guangdong 518000 (CN); NI, Tianyi, Shenzhen, Guangdong 518000 (CN); WEI, Haifeng, Shenzhen, Guangdong 518000 (CN)
(74) Representative: Lapienis, Juozas
(86) International application number: PCT/CN2022/076537
(87) International publication number: WO 2022/179422

(56) References cited:
- CN-A- 112 968 489
- CN-U- 207 664 869
- CN-U- 209 738 986
- CN-U- 211 579 638
- CN-U- 211 579 638
- CN-U- 212 304 824
- US-A1- 2004 172 603
- US-A1- 2016 156 211

## Description

### Technical Field

The present invention relates to battery pack multiple output technical field, and more particularly to a battery pack output control circuit.

### Background

Document CN212304824U discloses a BMS control anode charging activation circuit, which comprises a power module, a charging switch control module, a discharging switch control module, an AFE analog front end module, an activation module connected with the anode of the power module and a main control MCU connected with the cathode of the power module; the charging switch control module is connected between the anode of the power supply module and the discharging switch control module, and the charging switch control module and the discharging switch control module are also electrically connected with the AFE analog front end module; the AFE analog front end module is also electrically connected with the activation module, the main control MCU and the power module respectively, and the main control MCU is also electrically connected with the activation module.

Document US2016156211A1 discloses a battery pack, comprising a plurality of battery cells; and a charger to charge the battery cells, wherein the charger is to charge the battery cells a first time to a first predetermined voltage based on power from an external power source and is to charge a portion of the battery cells a second time to a second predetermined voltage.

The battery packs for traditional two wheeled vehicles generally only have a single output, namely, the battery voltage output. The output is then converted into a power supply available for other on-board equipment (lamps, meters, auxiliary power supplies, etc.) through a DC-DC conversion module on a motor controller, or the output is directly connected to the on-board equipment and is then converted into the power supply available for the equipment through DC-DC modules inside the equipment. In both cases, the motor controllers and controllers of the on-board equipment are complicated in structure, large in size, low in battery pack integration, difficult to miniaturize the equipment, and increase cost of the equipment.

### SUMMARY OF THE INVENTION

Therefore, it is necessary to provide a battery pack output control circuit which has multiple output circuits and each output can be independently controlled.

A battery pack output control circuit, for independently controlling output of each DC-DC module, comprises a MCU main control module, an AFE module, a high-side MOS driving module and a DC-DC module group.

An output end of the AFE module is connected with a driving input end of the high-side MOS driving module, and the AFE module controls charging and discharging of the battery pack by driving the high-side MOS driving module;
The AFE module includes a 22nd control chip U22, the 22nd control chip U22 includes a DSG driving pin and a CHG charging pin, and the DSG driving pin and the CHG charging pin of the 22nd control chip U22 are respectively connected to the high-side MOS driving module.

A power input terminal of the high-side MOS driving module is connected to a positive electrode B+ of the battery pack, and the high-side MOS driving module further comprises a control enable terminal P+_EN, a power output terminal P+ and a working output terminal PD+;
The high side MOS driving module includes a high-side NFET driver chip U5, a battery pack output control circuit, and a battery pack charge control circuit. A DSG input pin of the high-side NFET driver chip U5 is connected to a DSG driving pin of the twenty second control chip U22, and a CHG input pin of the high-side NFET driver chip U5 is connected to a CHG charging pin of the twenty second control chip U22.

The battery pack output control circuit is connected to a DSG_C of the high-side NFET driver chip U5, the battery pack output control circuit includes a first field effect transistor QD1 and a second field effect transistor QD2, and a gate electrode of the first field effect transistor QD1 is connected to the DSG_C pin of the high-side NFET driver chip U5, a drain electrode of the first field effect transistor QD1 is connected to a positive electrode B+ of the battery pack, a source electrode of the first field effect transistor QD1 is connected to the drain electrode of the second field effect transistor QD2, the gate electrode of the second field effect transistor QD2 is connected to a drain electrode of a field effect transistor Q7 and a drain electrode of a field effect transistor Q14, the source electrode of the second field effect transistor QD2 is the power output terminal P+ of the battery pack, and the source electrode of the first field effect transistor QD1 is the working output terminal PD+.

The MCU main control module comprises a seventh control chip U7, which is connected to the AFE module through an I2C bus, and the seventh control chip U7 further comprises a CHG_EN charging enable pin, a P+_EN enable pin, a 12V_EN pin, a 6V_EN pin, and a 5V_EN pin.

The source electrode of the field effect transistor Q7 is connected to the DSG_C pin of the high-side NFET driver chip U5, the gate electrode of field effect transistor Q7 is connected to a drain electrode of a field effect transistor Q27, and a gate electrode of the field effect transistor Q27 is connected to the P+_EN enable pin of the seventh control chip U7. A gate electrode of a field effect transistor Q14 is connected to a drain electrode of a field effect transistor Q13, and a gate electrode of the field effect transistor Q13 is connected to the P+_EN enable pin of the seventh control chip U7.

A power input terminal of the DC-DC module group is connected to the working output terminal PD+ of the high-side MOS driving module, the DC-DC module group includes a plurality of DC-DC modules, each of the DC-DC modules has a different output voltage, and each of the DC-DC modules has an output enable terminal;
The MCU main control module is in communication connection with the AFE module, the MCU main control module controls operation of the high-side MOS driving module through the AFE module, and a plurality of enable output terminals of the MCU main control module are respectively connected to the control enable terminal P+_EN of the high-side MOS driving module and the output enable end of each of the DC-DC modules to achieve independent control of the high-side MOS driving module and the output end of each of the DC-DC modules.

Further, the battery pack charging control circuit is connected to the CHG_C pin of the high-side NFET driver chip U5. The battery pack charging control circuit includes a field effect transistor QC1 and a field effect transistor QC2, and a gate electrode of the field effect transistor QC1 is connected to the CHG_C pin of the high-side NFET driver chip U5, a source electrode of the field effect transistor QC1 is connected to the positive electrode B+ of the battery pack, a drain electrode of the field effect transistor QC1 is connected to the source electrode of the field effect transistor QC2, a drain electrode of the field effect transistor QC2 is connected to the positive electrode CHG+ of the charging power supply, a gate electrode of the field effect transistor QC2 is connected to a drain electrode of a field effect transistor Q10, and a gate electrode of the field effect transistor Q10 is connected to the CHG_EN charging enable pin of the seventh control chip U7.

Further, the DC-DC module group includes a 12V DC-DC module, a 6V DC-DC module and a 5V DC-DC module, the 12V DC-DC module includes a first DC-DC control chip U1, a VIN pin of the first DC-DC control chip U1 is connected to the working output terminal PD+, a VOUT pin of the first DC-DC control chip U1 is connected to a source electrode of a field effect transistor Q3, and a drain electrode of the field effect transistor Q3 is a 12V DC power output terminal VOUT_12V. A gate electrode of the field effect transistor Q3 is connected to the drain electrode of a field effect transistor Q4, a source electrode of the field effect transistor Q4 is connected to the power output terminal P- of the battery pack, and a gate electrode of the field effect transistor Q4 is connected to 12V_EN pin of the seventh control chip U7.

Further, the 6V DC-DC module includes a third DC-DC control chip U3, a VIN pin of the third DC-DC control chip U3 is connected to the VOUT pin of the first DC-DC control chip U1, the VOUT pin of the third DC-DC control chip U3 is connected to the source electrode of a field effect transistor Q20, and the drain electrode of the field effect transistor Q20 is a 6V DC power output terminal VOUT_6V, a gate electrode of field effect transistor Q20 is connected to the drain electrode of field effect transistor Q22, the source electrode of field effect transistor Q22 is connected to the power output terminal P- of the battery pack, and the gate electrode of field effect transistor Q22 is connected to 6V_EN pin of the seventh control chip U7.

Further, the 5V DC-DC module includes a sixth DC-DC control chip U6, a VIN pin of the sixth DC-DC control chip U6 is connected to the VOUT pin of the first DC-DC control chip U1, a VOUT pin of the sixth DC-DC control chip U6 is connected to a source electrode of a field effect transistor Q23, and a drain electrode of the field effect transistor Q23 is a 5V DC power output terminal VOUT_5V, a gate electrode of field effect transistor Q23 is connected to a drain electrode of a field effect transistor Q24, a source electrode of field effect transistor Q24 is connected to the power output terminal P- of the battery pack, and a gate electrode of field effect transistor Q24 is connected to 5V_EN pin of the seventh control chip U7.

In the above-mentioned battery pack output control circuit, the battery pack is connected to the high-side MOS driving module, the 12V DC-DC module, the 6V DC-DC module and the 5V DC-DC module. The high-side MOS driving module has a power output terminal P+ of the main circuit battery pack, the 12V DC-DC module has the 12V DC power output terminal, the 6V DC-DC module has the 6V DC power output terminal, and the 5V DC-DC module has the 5V DC power output terminal. The MCU main control module independently controls the outputs of the high-side MOS driving module, the 12V DC-DC module, the 6V DC-DC module and the 5V DC-DC module through the P+_EN enable pin, the 12V_EN pin, 6V_EN pin, 5V_EN pin, respectively, to provide independent output power for other on-board equipment, thereby improving integration of the battery pack and reducing cost of the equipment. At the same time, each DC-DC module independently controls the 12V, 6V and 5V output power supplies respectively according to control signals sent by the MCU main control module, thereby improving stability of the battery pack. The principle of the invention is simplified and clear, the circuit construction is reasonable, easy to realize, the cost is low, and it is easy to popularize.

### BRIEF DESCRIPTION OF THE DRAWINGS

FIG. 1 is a block diagram of a battery pack output control circuit in accordance with an embodiment of the present invention.
FIG. 2 is a circuit diagram of the MCU main control module and the AFE module of the battery pack output control circuit according to the embodiment of the present invention.
FIG. 3 is a circuit diagram of a high-side MOS driving module of the battery pack output control circuit according to the embodiment of the present invention.
FIG. 4 is a circuit diagram of a 12V DC-DC module group of the battery pack output control circuit according to the embodiment of the present invention.
FIG. 5 is a circuit diagram of a 6V DC-DC module group of the battery pack output control circuit according to the embodiment of the present invention.
FIG. 6 is a circuit diagram of a 5V DC-DC module group of the battery pack output control circuit according to the embodiment of the present invention.

### DETAILED DESCRIPTION OF THE INVENTION

The present disclosure takes a battery pack output control circuit as an example, and will be described in detail below in combination with specific embodiments and the accompanying drawings.

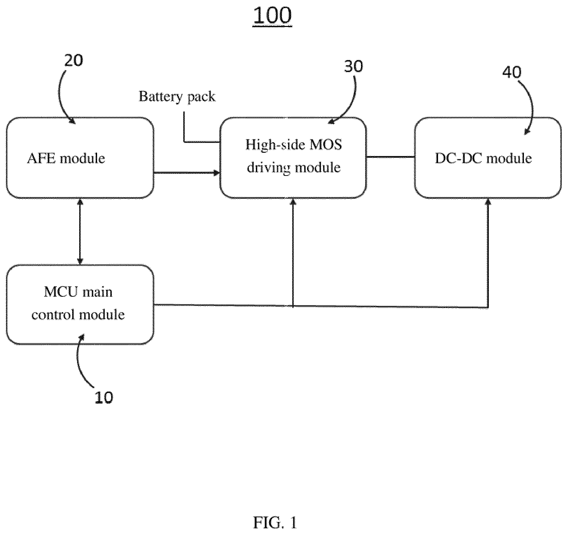

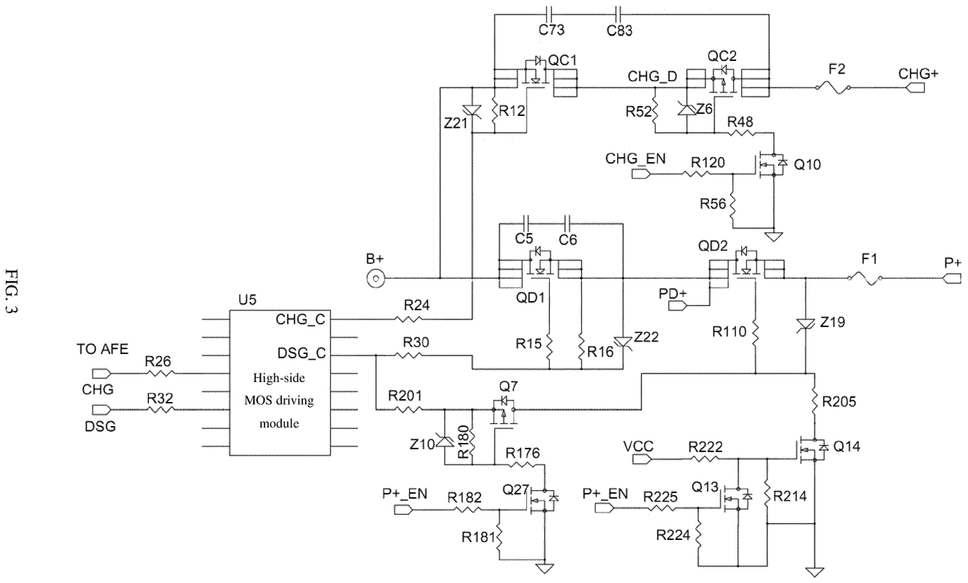

Referring to FIGS. 1, 2, 3, 4, 5 and 6, a battery pack output control circuit 100, for independently controlling output of each DC-DC conversion module, comprises a MCU main control module 10, an AFE module 20, a high-side MOS driving module 30 and a DC-DC module group 40.

An output end of the AFE module 20 is connected with a driving input end of the high-side MOS driving module 30, and the AFE module 20 controls charging and discharging of the battery pack by driving the high-side MOS driving module 30;

A power input terminal of the high-side MOS driving module 30 is connected to a positive electrode B+ of the battery pack, and the high-side MOS driving module 30 further comprises a control enable terminal P+_EN, a power output terminal P+ and a working output terminal PD+.

A power input terminal of the DC-DC module group 40 is connected to the working output terminal PD+ of the high-side MOS driving module 30, the DC-DC module group 40 includes a plurality of DC-DC modules, each of the DC-DC modules has a different output voltage, and each of the DC-DC modules has an output enable terminal.

The MCU main control module 10 is in communication connection with the AFE module 20, the MCU main control module 10 controls operation of the high-side MOS driving module 30 through the AFE module 20, and a plurality of enable output terminals of the MCU main control module 10 are respectively connected to the control enable terminal P+_EN of the high-side MOS driving module 30 and the output enable end of each of the DC-DC modules to achieve independent control of the high-side MOS driving module 30 and the output end of each of the DC-DC modules.

Further, the MCU main control module 10 comprises a seventh control chip U7, which is connected to the AFE module 20 through an I2C bus, and the seventh control chip U7 further comprises a CHG_EN charging enable pin, a P+_EN enable pin, a 12V_EN pin, a 6V_EN pin, and a 5V_EN pin.

Further, the AFE module 20 includes a 22nd control chip U22, the 22nd control chip U22 includes a DSG driving pin and a CHG charging pin, and the DSG driving pin and the CHG charging pin of the 22nd control chip U22 are respectively connected to the high-side MOS driving module 30.

Specifically, the DSG driving pin of the 22nd control chip U22 is configured to drive the high-side MOS driving module 30 to operate, so that the battery pack is in a discharge state. The CHG charging pin of the 22nd control chip U22 is configured to make the battery pack in the charging state.

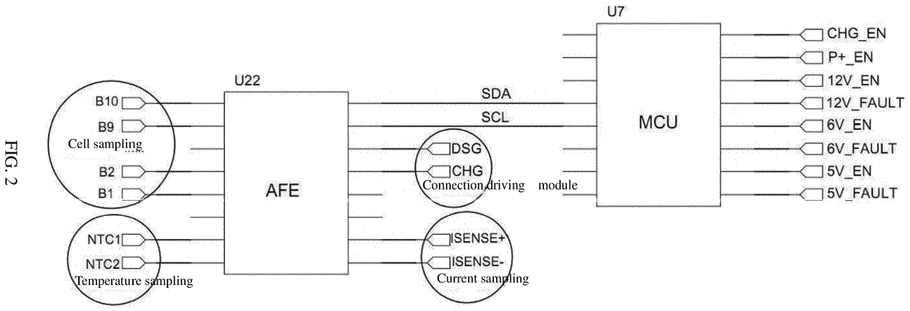

In the present embodiment, as shown in FIG. 2, the AFE module 20 is also configured to collect battery pack data, which include voltage, current and temperature of cell. The AFE module 20 transmits the collected battery pack data to the MCU main control module 10 through the I2C bus. The MCU main control module 10 determines whether to turn off the charge and discharge by analyzing the data information of the battery pack, and then transmits result to the AFE module 20. The AFE module 20 converts the determination result of the MCU main control module 10 into a charge and discharge MOS control signal and sends the signal to the high-side MOS driving module 30, accordingly accomplishing charge and discharge control of the battery pack. The MCU main control module 10 also sends multiple DC-DC enable signals to independently control output of each of the DC-DC modules.

Further, the high-side MOS driving module 30 includes a high-side NFET driver chip U5, a battery pack output control circuit, and a battery pack charge control circuit. A DSG input pin of the high-side NFET driver chip U5 is connected to the DSG driving pin of the twenty second control chip U22, e.g., through resistance R32. A CHG input pin of the high-side NFET driver chip U5 is connected to the CHG charging pin of the twenty second control chip U22, e.g., through resistance R26. When the DSG driving pin is at a high level, the high-side MOS driving module 30 causes the battery pack to be in a discharge state. When the CHG charging pin is at a high level, the high-side MOS driving module 30 causes the battery pack in a charged state.

Further, the battery pack output control circuit is connected to a DSG_C of the high-side NFET driver chip U5, and the battery pack output control circuit includes a first field effect transistor QD1 and a second field effect transistor QD2. The first field effect transistor QD1 and the second field effect transistor QD2 are usefully N-channel field effect transistors. A gate electrode of the first field effect transistor QD1 is connected to the DSG_C pin of the high-side NFET driver chip U5, e.g., through resistances R15 and R30. A drain electrode of the first field effect transistor QD1 is connected to a positive electrode B+ of the battery pack, and a source electrode of the first field effect transistor QD1 is connected to the drain electrode of the second field effect transistor QD2. A source of the first field effect transistor QD1 is connected to the gate electrode of the first field effect transistor QD1, e.g., through resistances R16 and R15, and a gate electrode of the second field effect transistor QD2 is connected to a drain electrode of a field effect transistor Q7, e.g., through a resistance R110. The gate electrode of the second field effect transistor QD2 is connected to the drain electrode of the field effect transistor Q7 and a drain electrode of a field effect transistor Q14, e.g., through resistances R110 and R205. The source electrode of the second field effect transistor QD2 is the power output terminal P+ of the battery pack, and the source electrode of the first field effect transistor QD1 is the working output terminal PD+. The source electrode of the field effect transistor Q7 is connected to the DSG_C pin of the high-side NFET driver chip U5, e.g., through a resistance R201. A gate electrode of field effect transistor Q7 is connected to a drain electrode of a field effect transistor Q27, e.g., through a resistance R176. The source electrode of the field effect transistor Q7 is connected to the gate electrode of the field effect transistor Q7, e.g., through a resistance R180. A gate electrode of the field effect transistor Q27 is connected to the P+_EN enable pin of the seventh control chip U7, e.g., through a resistance R182. The source electrode of the field effect transistor Q27 is connected to the gate electrode of the field effect transistor Q27, e.g., through a resistance R181. A gate electrode of a field effect transistor Q14 is connected to a drain electrode of a field effect transistor Q13. The gate electrode of a field effect transistor Q14 is connected to a power supply VCC, e.g., through a resistance R222. The source electrode of the field effect transistor Q14 is connected to the gate electrode of the field effect transistor Q14, e.g., through a resistance R214. A gate electrode of the field effect transistor Q13 is connected to the P+_EN enable pin of the seventh control chip U7, e.g., through a resistance R225. The source electrode of the field effect transistor Q13 is connected to the gate electrode of the field effect transistor Q13, e.g., through a resistance R224.

Further, the battery pack charging control circuit is connected to the CHG_C pin of the high-side NFET driver chip U5 and includes a field effect transistor QC1 and a field effect transistor QC2. A gate electrode of the field effect transistor QC1 is connected to the CHG_C pin of the high-side NFET driver chip U5, e.g., through a resistance R24. The source electrode of the field effect transistor QC1 is connected to the positive electrode B+ of the battery pack. The gate electrode of the field effect transistor QC1 is connected to the source electrode of the field effect transistor QC1, e.g., through a resistance R12. The drain electrode of the field effect transistor QC1 is connected to the source electrode of the field effect transistor QC2, and a drain electrode of the field effect transistor QC2 is connected to the positive electrode CHG+ of the charging power supply. The gate electrode of the field effect transistor QC2 is connected to the source electrode of the field effect transistor QC2, e.g., through a resistance R52. The gate electrode of the field effect transistor QC2 is connected to a drain electrode of a field effect transistor Q10, e.g., through a resistance R48. A gate electrode of the field effect transistor Q10 is connected to the CHG_EN charging enable pin of the seventh control chip U7, e.g., through a resistance R120. The gate electrode of the field effect transistor QC10 is connected to the source electrode of the field effect transistor QC10, e.g., through a resistance R56.

In the present embodiment, when a system completes self-test, the AFE module sends a start signal, that is, the DSG signal is a high level, and the DSG_C pin of the high-side NFET driver chip U5 outputs a high level to cause a conduction of the first field effect transistor QD1. At this time, the working output terminal PD+ has an output voltage, and the system is in a standby state.

When the P+_EN enable pin of the MCU main control module is set as a high level, the second field effect transistor QD2 can be conducted and the power output terminal P+ can generate an output.

When the DSG signal is at a high level and P+_EN enable end is at a high level, under a pump pressure of the high-side NFET driver chip U5, the high level of the DSG_C pin reaches the gate electrode of the first field effect transistor QD1 via R30 and R15 to cause conduction of the first field effect transistor QD1. At this time, The P+_EN enable terminal is at a high level, the field effect transistor Q13 is conducted. The gate electrode of the field effect transistor Q14 is decreased to a low level and the field effect transistor Q14 is not turned on. The P+EN enable terminal is at a high level, the field effect transistor Q27 is turned on, and the voltage is divided by R180 and R176, thereby causing a conduction of the field effect transistor Q7. The high-voltage driving signal of DSG_C reaches the gate electrode of the second field effect transistor QD2 via R201, Q7 and R110, thereby causing a conduction of the second field effect transistor QD2. At this time, the positive electrode B+ of the main circuit battery pack is conducted to the power output terminal P+, and the power output terminal P+ can generate an output normally.

When the DSG signal is at a high level and P+_EN enable end is at a low level, a pump pressure of the high-side NFET driver chip U5 causes conduction of the first field effect transistor QD1. At this time, The P+_EN enable terminal is at a low level, and the field effect transistor Q13 is not conductive. VCC divides the voltage through R222 and R214 to cause the gate electrode of field effect transistor Q14 to be a high level, and the field effect transistor Q14 is conducted. The gate electrode of the field effect transistor QD2 is decreased to a low level through R110 and R205. This is to ensure that the second field effect transistor QD2 will not be in a misopening state due to a reverse leakage current of body diode inside the field effect transistor Q7. At this time, the positive electrode B+ of the main circuit battery pack is conducted to the working output terminal PD+, the working output terminal PD+ is not conducted to the power output terminal P+, and the power output terminal P+ has no output.

When the first field effect transistor QD1 is conductive, the positive electrode B+ of the battery pack is conducted to the working output terminal PD+, and the working output terminal PD+ generate normally output. The MCU main control module sends the DC-DC output enable signal, thereby separately controlling the output of each DC-DC module.

Further, the DC-DC module group 40 includes a 12V DC-DC module, a 6V DC-DC module and a 5V DC-DC module.

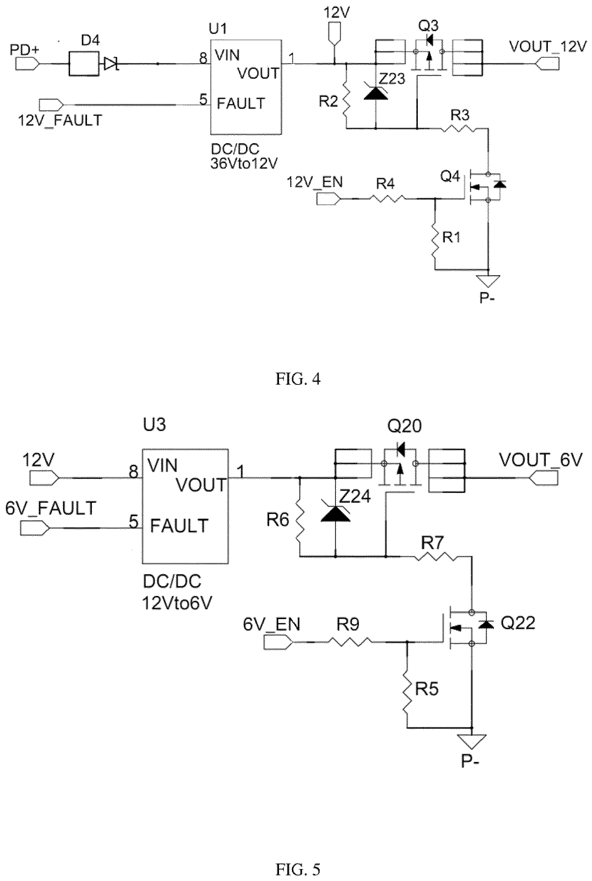

As shown in FIG. 4, the 12V DC-DC module includes a first DC-DC control chip U1. A VIN pin of the first DC-DC control chip U1 is connected to the working output terminal PD+, a VOUT pin of the first DC-DC control chip U1 is connected to a source electrode of a field effect transistor Q3, and a drain electrode of the field effect transistor Q3 is a 12V DC power output terminal VOUT_12V. The source electrode of the field effect transistor Q3 is connected to the gate electrode of a field effect transistor Q3 through a resistance R2. A gate electrode of the field effect transistor Q3 is connected to the drain electrode of a field effect transistor Q4 through a resistance R3, a source electrode of the field effect transistor Q4 is connected to the power output terminal P- of the battery pack. The source electrode of the field effect transistor Q4 is connected to the gate electrode of a field effect transistor Q4 through a resistance R1. The gate electrode of the field effect transistor Q4 is connected to 12V_EN pin of the seventh control chip U7 through a resistance R4.

As shown in FIG. 5, the 6V DC-DC module includes a third DC-DC control chip U3, the VIN pin of the third DC-DC control chip U3 is connected to a VOUT pin of the first DC-DC control chip U1. The VOUT pin of the third DC-DC control chip U3 is connected to a source electrode of a field effect transistor Q20, and a drain electrode of the field effect transistor Q20 is a 6V DC power output terminal VOUT_6V. The source electrode of the field effect transistor Q20 is connected to the gate electrode of a field effect transistor Q20 through a resistance R6. A gate electrode of field effect transistor Q20 is connected to the drain electrode of field effect transistor Q22 through a resistance R7, and the source electrode of field effect transistor Q22 is connected to the power output terminal P- of the battery pack. The source electrode of the field effect transistor Q22 is connected to the gate electrode of a field effect transistor Q22 through a resistance R5.The gate electrode of field effect transistor Q22 is connected to 6V_EN pin of the seventh control chip U7 through a resistance R9.

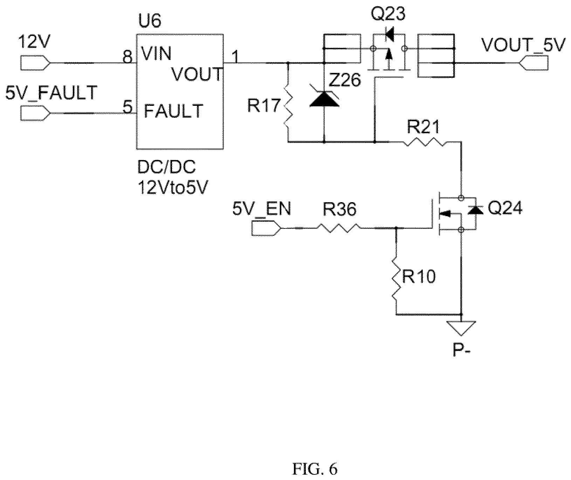

As shown in FIG. 6, the 5V DC-DC module includes a sixth DC-DC control chip U6, a VIN pin of the sixth DC-DC control chip U6 is connected to the VOUT pin of the first DC-DC control chip U1, and a VOUT pin of the sixth DC-DC control chip U6 is connected to a source electrode of a field effect transistor Q23. A drain electrode of the field effect transistor Q23 is a 5V DC power output terminal VOUT_5V. The source electrode of the field effect transistor Q23 is connected to the gate electrode of a field effect transistor Q23 through a resistance R17. A gate electrode of field effect transistor Q23 is connected to a drain electrode of a field effect transistor Q24, and a source electrode of field effect transistor Q24 is connected to the power output terminal P- of the battery pack. The source electrode of the field effect transistor Q24 is connected to the gate electrode of a field effect transistor Q24 through a resistance R10. A gate electrode of field effect transistor Q24 is connected to 5V_EN pin of the seventh control chip U7 through a resistance R36.

In the present embodiment, the first DC-DC control chip U1 is a PL59011 chip, which is a high-voltage PWM controller. The third DC-DC control chip U3 and the sixth DC-DC control chip U6 usefully adopt SCT2260AFPAR chip and are synchronous buck DC-DC converters.

Specifically, the seventh control chip U7 further includes a 12V_FAULT pin, a 6V_ FAULT pin and a 5V_FAULT pin. The 12V_FAULT pin, the 6V_FAULT pin and the 5V_ FAULT pin are connected to the FAULT pins of the first DC-DC control chip U1, the third DC-DC control chip U3 and the sixth DC-DC control chip U6, respectively, in order to control whether the first DC-DC control chip U1, the third DC-DC control chip U3 and the sixth DC-DC control chip U6 are at work, respectively.

In the present embodiment, when the working output terminal PD+ normally generates output and the 12V enable output terminal 12V_ EN of the MCU main control module is at a high level, the field effect transistor Q4 and the field effect transistor Q3 are conducted by voltage division of R4 and R1, so that the DC power output terminal of the 12V DC-DC module generates an output. The working output terminal PD + is converted into 12V output power through the first DC-DC control chip U1, and then output reaches to VOUT_12V through the field effect transistor Q3. When it is need to turn off VOUT_12V, but it is not necessary to close other circuits, only 12V_EN outputs a low level and the field effect transistor Q4 is not conducted. R3 is suspended, the field effect transistor Q3 is not conducted, and VOUT_12V will not generate an output.

Similarly, when 12V is normally output and 6V_EN is a high level, VOUT_6V normally generates an output. When 6V_EN is a low level, VOUT_6V will not generate an output. 5V power control is the same as above.

The output of each DC-DC module is controlled independently and separately, which optimizes efficiency of the DC-DC module, and temperature rise of the circuit is more controllable, which is relatively more useful to miniaturization configuration.

In the above-mentioned battery pack output control circuit, the battery pack is connected to the high-side MOS driving module, the 12V DC-DC module, the 6V DC-DC module and the 5V DC-DC module. The high-side MOS driving module has a power output terminal P+ of the main circuit battery pack, the 12V DC-DC module has the 12V DC power output terminal, the 6V DC-DC module has the 6V DC power output terminal, and the 5V DC-DC module has the 5V DC power output terminal. The MCU main control module independently controls the outputs of the high-side MOS driving module, the 12V DC-DC module, the 6V DC-DC module and the 5V DC-DC module through the P+_EN enable pin, the 12V_EN pin, 6V_EN pin, 5V_EN pin, respectively, to provide independent output power for other on-board equipment, thereby improving integration of the battery pack and reducing cost of the equipment. At the same time, each DC-DC module independently controls the 12V, 6V and 5V output power supplies respectively according to control signals sent by the MCU main control module, thereby improving stability of the battery pack. The principle of the invention is simplified and clear, the circuit construction is reasonable, easy to realize, the cost is low, and it is easy to popularize.
It is to be noted that the above-mentioned descriptions represent merely the exemplary embodiments of the present disclosure, without any intention to limit the scope of the present disclosure thereto. Those skilled in the art should understand that the present invention may have various modifications and changes. These modifications, equivalent replacements, improvements, etc. should be included in the scope of protection of the present invention as far as they come within the scope of the appended claims.

## Claims

1. A battery pack output control circuit, for independently controlling output of each DC-DC module, wherein the battery pack output control circuit comprises a MCU main control module, an AFE module, a high-side MOS driving module and a DC-DC module group;
an output end of the AFE module is connected with a driving input end of the high-side MOS driving module, the AFE module controls charging and discharging of the battery pack by driving the high-side MOS driving module, and the AFE module comprises a 22nd control chip U22, which comprises a DSG driving pin and a CHG charging pin, and the DSG driving pin and the CHG charging pin of the 22nd control chip U22 are respectively connected to the high-side MOS driving module;
a power input terminal of the high-side MOS driving module is connected to a positive electrode B+ of the battery pack, and the high-side MOS driving module further comprises a control enable terminal P+_EN, a power output terminal P+ and a working output terminal PD+, the high-side MOS driving module further comprising a high-side NFET driver chip U5, a battery pack output control circuit, and a battery pack charge control circuit; a DSG input pin of the high-side NFET driver chip U5 is connected to a DSG driving pin of the twenty second control chip U22, and a CHG input pin of the high-side NFET driver chip U5 is connected to a CHG charging pin of the twenty second control chip U22, wherein the battery pack output control circuit is connected to a DSG_C of the high-side NFET driver chip U5, the battery pack output control circuit comprises a first field effect transistor QD1 and a second field effect transistor QD2, the first field effect transistor QD1 and the second field effect transistor QD2 are N-channel field effect transistors, a gate electrode of the first field effect transistor QD1 is connected to the DSG_C pin of the high-side NFET driver chip U5, a drain electrode of the first field effect transistor QD1 is connected to a positive electrode B+ of the battery pack, a source electrode of the first field effect transistor QD1 is connected to the drain electrode of the second field effect transistor QD2, the gate electrode of the second field effect transistor QD2 is connected to a drain electrode of a field effect transistor Q7 and a drain electrode of a field effect transistor Q14, the source electrode of the second field effect transistor QD2 is the power output terminal P+ of the battery pack, and the source electrode of the first field effect transistor QD1 is the working output terminal PD+, the MCU main control module comprises a seventh control chip U7, which is connected to the AFE module through an I2C bus, and the seventh control chip U7 further comprises a CHG_EN charging enable pin, a P+_EN enable pin, a 12V_EN pin, a 6V_EN pin, and a 5V_EN pin; the source electrode of the field effect transistor Q7 is connected to the DSG_C pin of the high-side NFET driver chip U5, the gate electrode of field effect transistor Q7 is connected to a drain electrode of a field effect transistor Q27, a gate electrode of the field effect transistor Q27 is connected to the P+_EN enable pin of the seventh control chip U7, a gate electrode of a field effect transistor Q14 is connected to a drain electrode of a field effect transistor Q13, and a gate electrode of the field effect transistor Q13 is connected to the P+_EN enable pin of the seventh control chip U7;
a power input terminal of the DC-DC module group is connected to the working output terminal PD+ of the high-side MOS driving module, the DC-DC module group comprises a plurality of DC-DC modules, each of the DC-DC modules has a predetermined output voltage, and each of the DC-DC modules has an output enable terminal;
the MCU main control module is in communication connection with the AFE module, the MCU main control module controls operation of the high-side MOS driving module through the AFE module, and a plurality of enable output terminals of the MCU main control module are respectively connected to the control enable terminal P+_EN of the high-side MOS driving module and the output enable end of each of the DC-DC modules to achieve independent control of the high-side MOS driving module and the output end of each of the DC-DC modules.

2. The battery pack output control circuit according to claim 1, wherein the battery pack charging control circuit is connected to the CHG_C pin of the high-side NFET driver chip U5, the battery pack charging control circuit comprises a field effect transistor QC1 and a field effect transistor QC2, and a gate electrode of the field effect transistor QC1 is connected to the CHG_C pin of the high-side NFET driver chip U5, a source electrode of the field effect transistor QC1 is connected to the positive electrode B+ of the battery pack, a drain electrode of the field effect transistor QC1 is connected to the source electrode of the field effect transistor QC2, a drain electrode of the field effect transistor QC2 is connected to the positive electrode CHG+ of the charging power supply, a gate electrode of the field effect transistor QC2 is connected to a drain electrode of a field effect transistor Q10, and a gate electrode of the field effect transistor Q10 is connected to the CHG_EN charging enable pin of the seventh control chip U7.

3. The battery pack output control circuit according to claim 1, wherein the DC-DC module group comprises a 12V DC-DC module, a 6V DC-DC module and a 5V DC-DC module, the 12V DC-DC module comprises a first DC-DC control chip U1, a VIN pin of the first DC-DC control chip U1 is connected to the working output terminal PD+, a VOUT pin of the first DC-DC control chip U1 is connected to a source electrode of a field effect transistor Q3, a drain electrode of the field effect transistor Q3 is a 12V DC power output terminal VOUT_12V, a gate electrode of the field effect transistor Q3 is connected to the drain electrode of a field effect transistor Q4, a source electrode of the field effect transistor Q4 is connected to the power output terminal P- of the battery pack, and a gate electrode of the field effect transistor Q4 is connected to 12V_EN pin of the seventh control chip U7.

4. The battery pack output control circuit according to claim 3, wherein the 6V DC-DC module comprises a third DC-DC control chip U3, a VIN pin of the third DC-DC control chip U3 is connected to the VOUT pin of the first DC-DC control chip U1, the VOUT pin of the third DC-DC control chip U3 is connected to a source electrode of a field effect transistor Q20, a drain electrode of the field effect transistor Q20 is a 6V DC power output terminal VOUT_6V, a gate electrode of a field effect transistor Q20 is connected to a drain electrode of a field effect transistor Q22, a source electrode of the field effect transistor Q22 is connected to the power output terminal P- of the battery pack, and a gate electrode of the field effect transistor Q22 is connected to 6V_EN pin of the seventh control chip U7.

5. The battery pack output control circuit according to claim 3, wherein the 5V DC-DC module comprises a sixth DC-DC control chip U6, a VIN pin of the sixth DC-DC control chip U6 is connected to the VOUT pin of the first DC-DC control chip U1, a VOUT pin of the sixth DC-DC control chip U6 is connected to a source electrode of a field effect transistor Q23, and a drain electrode of the field effect transistor Q23 is a 5V DC power output terminal VOUT_5V, a gate electrode of field effect transistor Q23 is connected to a drain electrode of a field effect transistor Q24, a source electrode of field effect transistor Q24 is connected to the power output terminal P- of the battery pack, and a gate electrode of field effect transistor Q24 is connected to 5V_EN pin of the seventh control chip U7.

## Patentansprüche

1. Ausgangssteuerschaltung eines Akkupacks zur unabhängigen Steuerung des Ausgangs jedes DC-DC-Moduls, wobei die Ausgangssteuerschaltung des Akkupacks ein MCU-Hauptsteuermodul, ein AFE-Modul, ein High-Side-MOS-Treibermodul und eine DC-DC-Modulgruppe umfasst;
ein Ausgangsende des AFE-Moduls mit einem Treibereingangsende des High-Side-MOS-Treibermoduls verbunden ist, das AFE-Modul das Laden und Entladen des Akkupacks durch Ansteuerung des High-Side-MOS-Treibermoduls steuert, und das AFE-Modul einen 22. Steuerchip U22 umfasst, der einen DSG-Treiberpin und einen CHG-Ladepin umfasst, und der DSG-Treiberpin und der CHG-Ladepin des 22. Steuerchips U22 jeweils mit dem High-Side-MOS-Treibermodul verbunden sind;
ein Stromeingangsanschluss des High-Side-MOS-Treibermoduls mit einer positiven Elektrode B+ des Akkupacks verbunden ist, und das High-Side-MOS-Treibermodul zusätzlich einen Steuerfreigabeanschluss P+_EN, einen Stromausgangsanschluss P+ und einen Arbeitsausgangsanschluss PD+ umfasst, das High-Side-MOS-Treibermodul zusätzlich einen High-Side-NFET-Treiberchip U5, eine Ausgangssteuerschaltung des Akkupacks und eine Ladesteuerschlaltung des Akkupacks umfasst; ein DSG-Eingangspin des High-Side-NFET-Treiberchips U5 mit einem DSG-Treiberpin des zweiundzwanzigsten Steuerchips U22 verbunden ist, und ein CHG-Eingangspin des High-Side-NFET-Treiberchips U5 mit einem CHG-Ladepin des zweiundzwanzigsten Steuerchips U22 verbunden ist, wobei die Ausgangssteuerschaltung des Akkupacks mit einem DSG_C des High-Side-NFET-Treiberchips U5 verbunden ist, die Ausgangssteuerschaltung des Akkupacks einen ersten Feldeffekttransistor QD1 und einen zweiten Feldeffekttransistor QD2 umfasst, der erste Feldeffekttransistor QD1 und der zweite Feldeffekttransistor QD2 N-Kanal-Feldeffekttransistoren sind, eine Gate-Elektrode des ersten Feldeffekttransistors QD1 mit dem DSG_C-Pin des High-Side-NFET-Treiberchips U5 verbunden ist, eine Drain-Elektrode des ersten Feldeffekttransistors QD1 mit einer positiven Elektrode B+ des Akkupacks verbunden ist, eine Quellenelektrode des ersten Feldeffekttransistors QD1 mit der Drain-Elektrode des zweiten Feldeffekttransistors QD2 verbunden ist, die Gate-Elektrode des zweiten Feldeffekttransistors QD2 mit einer Drain-Elektrode eines Feldeffekttransistors Q7 und einer Drain-Elektrode eines Feldeffekttransistors Q14 verbunden ist, die Quellenelektrode des zweiten Feldeffekttransistors QD2 der Stromausgangsanschluss P+ des Akkupacks ist, und die Quellenelektrode des ersten Feldeffekttransistors QD1 der Arbeitsausgangsanschluss PD+ ist, das MCU-Hauptsteuermodul einen siebten Steuerchip U7 umfasst, der mit dem AFE-Modul über einen I2C-Bus verbunden ist, und der siebte Steuerchip U7 zusätzlich einen CHG_EN-Ladefreigabepin, einen P+_EN-Freigabepin, einen 12V_EN-Pin, einen 6V_EN-Pin und einen 5V_EN-Pin umfasst; die Quellenelektrode des Feldeffekttransistors Q7 mit dem DSG_C-Pin des High-Side-NFET-Treiberchips U5 verbunden ist, die Gate-Elektrode des Feldeffekttransistors Q7 mit einer Drain-Elektrode eines Feldeffekttransistors Q27 verbunden ist, eine Gate-Elektrode des Feldeffekttransistors Q27 mit dem P+_EN-Freigabepin des siebten Steuerchips U7 verbunden ist, eine Gate-Elektrode eines Feldeffekttransistors Q_14 mit einer Drain-Elektrode eines Feldeffekttransistors Q13 verbunden ist, und eine Gate-Elektrode des Feldeffekttransistors Q13 mit dem P+_EN-Freigabepin des siebten Steuerchips U7 verbunden ist;
ein Stromeingangsanschluss der DC-DC-Modulgruppe mit dem Arbeitsausgangsanschluss PD+ des High-Side-MOS-Treibermoduls verbunden ist, die DC-DC-Modulgruppe eine Mehrzahl von DC-DC-Modulen umfasst, jedes der DC-DC-Module eine vorbestimmte Ausgangsspannung hat, und jedes der DC-DC-Module einen Ausgangsfreigabeanschluss hat;
das MCU-Hauptsteuermodul mit dem AFE-Modul in Kommunikationsverbindung steht, das MCU-Hauptsteuermodul den Betrieb des High-Side-MOS-Treibermoduls über das AFE-Modul steuert, und eine Mehrzahl von Freigabeausgangsanschlüssen des MCU-Hauptsteuermoduls jeweils mit dem Steuerfreigabeanschluss P+_EN des High-Side-MOS-Treibermoduls und dem Ausgangsfreigabeende jedes der DC-DC-Module verbunden sind, um unabhängige Steuerung des High-Side-MOS-Treibermoduls und des Ausgangsendes jedes der DC-DC-Module zu erreichen.

2. Ausgangssteuerschaltung des Akkupacks nach Anspruch 1, wobei die Ladesteuerschaltung des Akkupacks mit dem CHG_C-Pin des High-Side-NFET-Treiberchips U5 verbunden ist, die Ladesteuerschaltung des Akkupacks einen Feldeffekttransistor QC1 und einen Feldeffekttransistor QC2 umfasst, und eine Gate-Elektrode des Feldeffekttransistors QC1 mit dem CHG_C-Pin des High-Side-NFET-Treiberchips U5 verbunden ist, eine Quellenelektrode des Feldeffekttransistors QC1 mit der positiven Elektrode B+ des Akkupacks verbunden ist, eine Drain-Elektrode des Feldeffekttransistors QC1 mit der Quellenelektrode des Feldeffekttransistors QC2 verbunden ist, eine Drain-Elektrode des Feldeffekttransistors QC2 mit der positiven Elektrode CHG+ der Ladestromversorgung verbunden ist, eine Gate-Elektrode des Feldeffekttransistors QC2 mit einer Drain-Elektrode eines Feldeffekttransistors Q10 verbunden ist, und eine Gate-Elektrode des Feldeffekttransistors Q10 mit dem CHG_EN-Ladefreigabepin des siebten Steuerchips U7 verbunden ist.

3. Ausgangssteuerschaltung des Akkupacks nach Anspruch 1, wobei die DC-DC-Modulgruppe ein 12V-DC-DC-Modul, ein 6V-DC-DC-Modul und ein 5V-DC-DC-Modul umfasst, das 12V-DC-DC-Modul einen ersten DC-DC-Steuerchip U1 umfasst, ein VIN-Pin des ersten DC-DC-Steuerchips U1 mit dem Arbeitsausgangsanschluss PD+ verbunden ist, ein VOUT-Pin des ersten DC-DC-Steuerchips U1 mit einer Quellenelektrode eines Feldeffekttransistors Q3 verbunden ist, eine Drain-Elektrode des Feldeffekttransistors Q3 ein 12V-DC-Stromausgangsanschluss VOUT_12V ist, eine Gate-Elektrode des Feldeffekttransistors Q3 mit der Drain-Elektrode eines Feldeffekttransistors Q4 verbunden ist, eine Quellenelektrode des Feldeffekttransistors Q4 mit dem Stromausgangsanschluss P- des Akkupacks verbunden ist, und eine Gate-Elektrode des Feldeffekttransistors Q4 mit 12V_EN-Pin des siebten Steuerchips U7 verbunden ist.

4. Ausgangssteuerschaltung des Akkupacks nach Anspruch 3, wobei das 6V-DC-DC-Modul einen dritten DC-DC-Steuerchip U3 umfasst, ein VIN-Pin des dritten DC-DC-Steuerchips U3 mit dem VOUT-Pin des ersten DC-DC-Steuerchips U1 verbunden ist, der VOUT-Pin des dritten DC-DC-Steuerchips U3 mit einer Quellenelektrode eines Feldeffekttransistors Q20 verbunden ist, eine Drain-Elektrode des Feldeffekttransistors Q20 ein 6V-DC-Stromausgangsanschluss VOUT_6V ist, eine Gate-Elektrode eines Feldeffekttransistors Q20 mit einer Drain-Elektrode eines Feldeffekttransistors Q22 verbunden ist, eine Quellenelektrode des Feldeffekttransistors Q22 mit dem Stromausgangsanschluss P- des Akkupacks verbunden ist, und eine Gate-Elektrode des Feldeffekttransistors Q22 mit 6V_EN-Pin des siebten Steuerchips U7 verbunden ist.

5. Ausgangssteuerschaltung des Akkupacks nach Anspruch 3, wobei das 5V-DC-DC-Modul einen sechsten DC-DC-Steuerchip U6 umfasst, ein VIN-Pin des sechsten DC-DC-Steuerchips U6 mit dem VOUT-Pin des ersten DC-DC-Steuerchips U1 verbunden ist, ein VOUT-Pin des sechsten DC-DC-Steuerchips U6 mit einer Quellenelektrode eines Feldeffekttransistors Q23 verbunden ist, und eine Drain-Elektrode des Feldeffekttransistors Q23 ein 5V-DC-Stromausgangsanschluss VOUT_5V ist, eine Gate-Elektrode des Feldeffekttransistors Q23 mit einer Drain-Elektrode eines Feldeffekttransistors Q24 verbunden ist, eine Quellenelektrode des Feldeffekttransistors Q24 mit dem Stromausgangsanschluss P- des Akkupacks verbunden ist, und eine Gate-Elektrode des Feldeffekttransistors Q24 mit 5V_EN-Pin des siebten Steuerchips U7 verbunden ist.

## Revendications

1. Un circuit de contrôle de sortie de batterie-bloc, pour contrôler indépendamment la sortie de chaque module CC-CC, dans lequel le circuit de contrôle de sortie de batterie-bloc comprend un module de contrôle principal MCU, un module AFE, un module de commande MOS de côté haut et un groupe de modules CC-CC;
une extrémité de sortie du module AFE est connectée à une extrémité d'entrée de commande du module de commande MOS de côté haut, le module AFE contrôle la charge et la décharge du batterie-bloc en pilotant le module de commande MOS de côté haut, et le module AFE comprend une 22e puce de contrôle U22, qui comprend une broche de commande DSG et une broche de charge CHG, et la broche de commande DSG et la broche de charge CHG de la 22e puce de contrôle U22 sont respectivement connectées au module de commande MOS de côté haut;
une borne d'entrée d'alimentation du module de commande MOS de côté haut est connectée à une électrode positive B+ du batterie-bloc, et le module de commande MOS de côté haut comprend en outre une borne d'activation de contrôle P+_EN, une borne de sortie d'alimentation P+ et une borne de sortie d'opération PD+, le module de commande MOS de côté haut comprend en outre une puce de commande NFET de côté haut U5, un circuit de contrôle de sortie du batterie-bloc et un circuit de contrôle de charge du batterie-bloc; une broche d'entrée DSG de la puce de commande NFET de côté haut U5 est connectée à une broche de commande DSG de la 22e puce de contrôle U22, et une broche d'entrée CHG de la puce de commande NFET de côté haut U5 est connectée à une broche de charge CHG de la puce de contrôle U22, où le circuit de contrôle de sortie du batterie-bloc est connecté à DSG_C de la puce de commande NFET de côté haut U5, le circuit de contrôle de sortie du batterie-bloc comprend un premier transistor effet de champ QD1 et un second transistor effet de champ QD2, le premier transistor effet de champ QD1 et le second transistor effet de champ QD2 sont des transistors effet de champ à N canaux, l'électrode de grille du premier transistor effet de champ QD1 est connectée à DSG_C de la puce de commande NFET de côté haut U5, l'électrode de drain du premier transistor effet de champ QD1 est connectée à une électrode positive B+ du batterie-bloc, l'électrode de source du premier transistor effet de champ QD1 est connectée à l'électrode de drain du deuxième transistor effet de champ QD2, l'électrode de grille du deuxième transistor effet de champ QD2 est connectée à une électrode de drain d'un transistor effet de champ Q7 et à une électrode de drain d'un transistor effet de champ Q14, l'électrode de source du deuxième transistor effet de champ QD2 est la borne de sortie d'alimentation P+ du batterie-bloc, et l'électrode de source du premier transistor effet de champ QD1 est la borne de sortie d'opération PD+, le module de contrôle principal MCU comprend une septième puce de contrôle U7, qui est connectée au module AFE via un bus I2C, et la septième puce de contrôle U7 comprend en outre une broche d'activation de charge CHG_EN, une broche d'activation P+_EN, une broche 12V_EN, une broche 6V_EN et une broche 5V_EN; l'électrode de source du transistor effet de champ Q7 est connectée à la broche DSG_C de la puce de commande NFET de côté haut U5, l'électrode de grille du transistor effet de champ Q7 est connectée à une électrode de drain d'un transistor effet de champ Q27, une électrode de grille du transistor effet de champ Q27 est connectée à la broche d'activation P+_EN de la septième puce de contrôle U7, une électrode de grille d'un transistor à effet de champ Q14 est connectée à une électrode de drain d'un transistor effet de champ Q13, et une électrode de grille du transistor effet de champ Q13 est connectée à la broche d'activation P+_EN de la septième puce de contrôle U7;
une borne d'entrée d'alimentation du groupe de modules CC-CC est connectée à la borne de sortie d'opération PD+ du module de commande MOS de côté haut, le groupe de modules CC-CC comprend une pluralité de modules CC-CC, chacun des modules CC-CC a un voltage de sortie prédéterminé et chacun des modules CC-CC a une borne d'activation de sortie;
le module de contrôle principal MCU est en communication avec le module AFE, le module de contrôle principal MCU contrôle l'opération du module de commande MOS de côté haut via le module AFE, et une pluralité de bornes d'activation de sortie du module de contrôle principal MCU sont respectivement connectées à la borne d'activation de contrôle P+_EN du module de commande de transistor MOS de côté haut et à l'extrémité d'activation de sortie de chacun des modules CC-CC pour réaliser un contrôle indépendant du module de commande MOS de côté haut et de l'extrémité de sortie de chacun des modules CC-CC.

2. Le circuit de contrôle de sortie du batterie-bloc selon la revendication 1, dans lequel le circuit de contrôle de charge du batterie-bloc est connecté à la broche CHG_C de la puce de commande NFET de côté haut U5, le circuit de contrôle de charge du batterie-bloc comprend un transistor effet de champ QC1 et un transistor effet de champ QC2, et une électrode de grille du transistor effet de champ QC1 est connectée à la broche CHG_C de la puce de commande NFET de côté haut U5, une électrode de source du transistor effet de champ QC1 est connectée à l'électrode positive B+ du batterie-bloc, une électrode de drain du transistor effet de champ QC1 est connectée à l'électrode de source du transistor effet de champ QC2, une électrode de drain du transistor effet de champ QC2 est connectée à l'électrode positive CHG+ de l'alimentation de charge, une électrode de grille du transistor effet de champ QC2 est connectée à une électrode de drain d'un transistor effet de champ Q10, et une électrode de grille du transistor effet de champ Q10 est connectée à la broche d'activation de charge CHG_EN de la septième puce de contrôle U7.

3. Le circuit de contrôle de sortie du batterie-bloc selon la revendication 1, dans lequel le groupe de modules CC-CC comprend un module CC-CC 12 V, un module CC-CC 6 V et un module CC-CC 5 V, le module CC-CC 12 V comprend une première puce de contrôle CC-CC U1, la broche VIN de la première puce de contrôle CC-CC U1 est connectée à la borne de sortie d'opération PD+, une broche VOUT de la première puce de contrôle CC-CC U1 est connectée à l'électrode de source d'un transistor effet de champ Q3, l'électrode de drain du transistor effet de champ Q3 est la borne de sortie d'alimentation CC 12 V VOUT_12V, l'électrode de grille du transistor effet de champ Q3 est connectée à l'électrode de drain d'un transistor effet de champ Q4, l'électrode de source du transistor effet de champ Q4 est connectée à la borne de sortie d'alimentation P- du batterie-bloc, et l'électrode de grille du transistor effet de champ Q4 est connectée à la broche 12V_EN de la septième puce de contrôle U7.

4. Le circuit de commande de sortie du batterie-bloc selon la revendication 3, dans lequel le module CC-CC 6V comprend une troisième puce de contrôle CC-CC U3, une broche VIN de la troisième puce de contrôle CC-CC U3 est connectée à la broche VOUT de la première puce de contrôle CC-CC U1, la broche VOUT de la troisième puce de contrôle CC-CC U3 est connectée à une électrode de source d'un transistor effet de champ Q20, une électrode de drain du transistor effet de champ Q20 est une borne de sortie d'alimentation CC 6 V VOUT_6V, une électrode de grille d'un transistor effet de champ Q20 est connectée à une électrode de drain d'un transistor effet de champ Q22, une électrode de source du transistor effet de champ Q22 est connectée à la borne de sortie d'alimentation P- du batterie-bloc, et une électrode de grille du transistor effet de champ Q22 est connectée à la broche 6V_EN de la septième puce de contrôle U7.

5. Le circuit de contrôle de sortie du batterie-bloc selon la revendication 3, dans lequel le module CC-CC 5 V comprend une sixième puce de contrôle DC-DC U6, une broche VIN de la sixième puce de contrôle DC-DC U6 est connectée à la broche VOUT de la première puce de contrôle DC-DC U1, une broche VOUT de la sixième puce de contrôle CC-CC U6 est connectée à l'électrode de source d'un transistor effet de champ Q23, l'électrode de drain du transistor effet de champ Q23 est la borne de sortie d'alimentation CC 5 V VOUT_5V, l'électrode de grille du transistor effet de champ Q23 est connectée à l'électrode de drain d'un transistor effet de champ Q24, l'électrode de source du transistor effet de champ Q24 est connectée à la borne de sortie d'alimentation P- du batterie-bloc, et l'électrode de grille du transistor effet de champ Q24 est connectée à la broche 5V_EN de la septième puce de contrôle U7.
